# FASCICULE DE BREVET EUROPEEN

(11) **EP 2 868 955 B1**
(45) Date de publication et mention de la délivrance du brevet: **28.12.2016**
(21) Numéro de dépôt: 14306581.1
(22) Date de dépôt: 08.10.2014
(51) Int. Cl.: F16L 1/235, B65H 59/22, F16L 1/00

(54) **Tensionneur pour le serrage et l'avancement contrôlés d'un corps allongé, notamment pour une installation de dépose de pipe-lines, d'ombilicaux ou de câbles**
Spannvorrichtung zur kontrollierten Einspannung und Beförderung eines länglichen Körpers, insbesondere für einen Anlage zum Verlegen von Pipelines, Energie- oder Versorgungsleitungen
Tensioner for controlled clamping and advancement of an elongate body, in particular for a facility for laying pipelines, umbilicals or cables

(30) Priorité: 31.10.2013 FR 1360680
(43) Date de publication de la demande: 06.05.2015
(73) Titulaire: REEL, 69450 Saint-Cyr-au-Mont-d'Or (FR)
(72) Inventeur: Konate, Karamoko, 17220 Saint-Rogatien (FR)
(74) Mandataire: Jacobacci Coralis Harle

(56) Documents cités:
- WO-A1-96/00359
- FR-A1- 2 953 579
- GB-A- 2 199 632

## Description

### DOMAINE TECHNIQUE AUQUEL SE RAPPORTE L'INVENTION

La présente invention concerne un tensionneur pour le serrage et l'avancement contrôlés d'un corps allongé, adapté en particulier pour équiper une installation de dépose de pipe-lines, d'ombilicaux ou de câbles.

### ARRIERE-PLAN TECHNOLOGIQUE

Certaines installations sont conçues pour permettre la dépose de corps allongés, sur une surface de réception, notamment de câbles, d'ombilicaux ou de pipe-lines, flexibles ou rigides.
On rencontre notamment ce genre d'installation sur les navires équipés pour la dépose de câbles, d'ombilicaux ou de pipe-lines, le long des fonds océaniques.

De telles installations de dépose comprennent généralement un équipement appelé tensionneur assurant une prise en charge par serrage du corps allongé et son avancement pour permettre une dépose d'une manière contrôlée.

Plus précisément, un premier rôle du tensionneur est de constamment serrer le câble, l'ombilical ou le pipe-line d'une manière efficace, tenant compte du fait que le poids de la partie du corps allongé qui est transférée hors du navire, augmente de manière significative au fur et à mesure de la dépose.

Le second rôle du tensionneur est de manoeuvrer le corps allongé pour assurer son déplacement longitudinal, d'une manière contrôlée. La vitesse de dépose mise en oeuvre dépend de plusieurs paramètres, notamment du relief de la surface de réception ; cette vitesse de dépose dépend également, du temps nécessaire pour l'assemblage des portions du câble, d'ombilical ou du pipe-line, cet assemblage étant généralement réalisé directement sur le navire, au moment même des opérations de dépose.

Pour répondre à ces contraintes, les tensionneurs comprennent classiquement un châssis portant une pluralité de caissons de guidage qui sont mobiles perpendiculairement à l'axe du corps allongé et qui sont reliés à un système de vérin, pour assurer le serrage recherché tout au long de la pose du corps allongé.

De tels tensionneurs sont par exemple décrits dans les documents FR-2 953 579, GB-2 199 632 et WO-96/00359.

Mais les câbles, les ombilicaux ou les pipe-lines comportent fréquemment des variations de section sur leur longueur, liées notamment à la présence de cordons de soudure réalisés pour assembler les différents tronçons constitutifs (occasionnant des défauts de diamètre généralement de l'ordre de 15 mm), ou dues aux réparations mises en oeuvre en cas de dégradations (dans ce cas, les variations de diamètre peuvent atteindre 40 mm, à cause des surcouches de réparations rapportées).

Du fait de ces variations de section, la force de serrage appliquée par les tensionneurs actuels peut évoluer au cours du guidage de dépose, et être par moments trop élevée ou trop faible.

D'autre part, le tronçon serré du corps n'est pas toujours centré de manière optimale au sein du tensionneur, créant des différences d'effort entre les caissons de guidage.

Par ailleurs, on rencontre également un problème avec les tensionneurs actuels dans le cas d'une coupure d'alimentation en énergie.
En effet, dans ce contexte, les caissons sont immobilisés les uns par rapport aux autres, alors que le corps associé est susceptible d'exercer encore des efforts importants sur l'un ou l'autre desdits caissons.

### OBJET DE L'INVENTION

Au regard de ces problèmes, la demanderesse a développé une nouvelle structure de tensionneur qui est apte à assurer un serrage efficace de l'organe allongé tout au long de sa dépose, cela par une prise en charge convenable quelles que soient ses variations de section.

Le tensionneur correspondant a également pour intérêt de maintenir et d'autoriser un certain ajustement du serrage sur le corps allongé associé, en cas d'une coupure d'alimentation en énergie.

Pour cela, les moyens de manoeuvre associés à chacun des caissons du tensionneur selon l'invention comprennent :
(i) au moins un actionneur linéaire comportant un vérin de manoeuvre prolongé par des moyens ressorts, lequel vérin de manoeuvre et lesquels moyens ressorts présentent chacun un axe longitudinal d'allongement, lesdits axes d'allongement étant orientés coaxialement, ou au moins approximativement coaxialement, l'un par rapport à l'autre pour former ensemble l'axe d'allongement dudit actionneur linéaire, et
(ii) des moyens programmables pour le pilotage dudit vérin de manoeuvre en allongement.

Un tensionneur équipé de tels moyens de manoeuvre s'avère en pratique particulièrement efficace en termes de serrage et d'avancement du corps associé, grâce à une force de serrage stable ou au moins approximativement stable.
Ce tensionneur est en plus particulièrement sécurisant, du fait de l'amélioration de sa capacité de maintien du serrage en cas de coupure d'alimentation en énergie.

Selon un mode de réalisation préféré, le ou les vérins de manoeuvre consistent en des vérins électriques comportant chacun des moyens moteurs électriques pour la manoeuvre en rotation d'une vis associée à un écrou porté par une partie formant tige.

Encore de préférence, les moyens ressorts consistent en un ressort en forme de vérin, par exemple un ressort à gaz, un ressort à ressort métallique ou un ressort en élastomère (avantageusement en forme de vérin, c'est-à-dire avantageusement un vérin à gaz, un vérin à ressort ou un vérin à élastomère).

Selon un mode de réalisation particulièrement intéressant, l'actionneur linéaire est équipé de moyens capteurs de force, pour mesurer au moins la valeur de la force de compression s'exerçant sur lui, selon son axe longitudinal d'allongement ; de plus, le vérin de manoeuvre et les moyens ressorts comportent chacun des moyens capteurs d'allongement, pour mesurer la valeur de leurs allongements respectifs ; et les moyens programmables pilotent l'allongement dudit vérin de manoeuvre en fonction, d'une part, de ladite valeur de force de compression mesurée et d'une consigne de valeur de force de compression, et d'autre part, de la valeur d'allongement de l'actionneur linéaire mesurée par lesdits capteurs d'allongement.

Une telle structure vise à optimiser encore le fonctionnement du tensionneur en termes de serrage du corps allongé associé ; elle favorise aussi le centrage du tronçon de corps allongé dans le tensionneur.

Dans ce cas, le tensionneur comporte avantageusement au moins deux caissons disposés en regard, répartis autour de son axe de symétrie ; et les moyens programmables associés auxdits caissons en regard pilotent l'allongement de leurs vérins de manoeuvre en fonction également de la valeur d'allongement desdits actionneurs linéaires en regard.
De plus, les moyens programmables pilotent avantageusement l'allongement des vérins de manoeuvre en regard de sorte que la valeur d'allongement des actionneurs linéaires en regard soit identique ou au moins approximativement identique.

En outre, les moyens capteurs d'allongement équipant les moyens ressorts consistent de préférence en un codeur linéaire.
Et dans le cas de vérins de manoeuvre consistant en des vérins électriques, les moyens capteurs d'allongement équipant ledit ou lesdits vérins se présentent avantageusement chacun sous la forme d'un codeur rotatif.

D'autres caractéristiques avantageuses de l'invention sont encore présentées ci-dessous :
- les vérins de manoeuvre ont chacun une longueur de course qui est supérieure à la longueur de course des moyens ressorts ;
- les actionneurs linéaires sont fixés chacun sur le châssis de tensionneur et sur l'un des caissons de guidage, et ils sont orientés de sorte que leur vérin de manoeuvre soit solidarisé avec ledit châssis de tensionneur, et de sorte que leurs moyens ressorts soient solidarisés avec l'un desdits caissons de guidage ;
- le tensionneur est agencé de sorte que son axe de symétrie soit orienté verticalement, ou au moins sensiblement verticalement ;
- les caissons, au moins au nombre de 2 (par exemple au nombre de 2, 3 ou 4), sont équipés chacun d'au moins une chaîne de guidage.

### DESCRIPTION DETAILLEE D'UN EXEMPLE DE REALISATION

L'invention sera encore illustrée, sans être aucunement limitée, par la description suivante d'une forme de réalisation particulière, donnée uniquement à titre d'exemple, et représentée sur les dessins annexés dans lesquels :
- la figure 1 est une vue générale et en perspective d'un tensionneur selon l'invention ;
- la figure 2 est une vue en perspective de l'un des caissons de guidage équipant le tensionneur de la figure 1, et de ses moyens de manoeuvre en translation ;
- la figure 3 est une vue en perspective d'un actionneur linéaire constitutif des moyens de manoeuvre des caissons selon les figures 1 ou 2 ;
- la figure 4 est une vue de côté de l'actionneur linéaire de la figure 3, avec un plan de coupe longitudinal ;
- la figure 5 représente l'actionneur linéaire selon les figures 3 et 4, selon deux configurations différentes : d'une part, avec le vérin de manoeuvre rétracté et les moyens élastiques ressorts déployés, sur la figure 5A (vu de côté et selon un plan de coupe longitudinal), et d'autre part, avec le vérin de manoeuvre déployé et les moyens ressorts rétractés, sur la figure 5B (vu de côté) ;
- la figure 6 montre deux caissons de guidage en regard, respectivement en configuration écartée (figure 6A) et en configuration rapprochée (figure 6B).

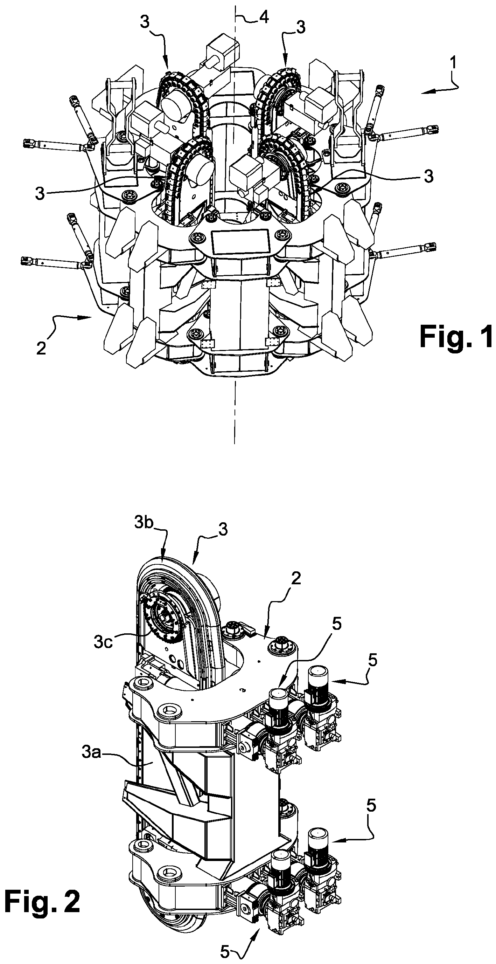

Le tensionneur 1, représenté sur la figure 1, est adapté notamment pour équiper une installation de dépose de pipe-lines, ombilicaux ou câbles, destinée à être portée par un navire ou une plateforme off-shore (non représentés).

Ce tensionneur 1 comprend un châssis 2 qui est muni de moyens pour sa fixation sur le pont du navire ou de la plateforme off-shore ; ce châssis 2 porte des caissons de guidage 3 qui sont agencés autour d'un axe de symétrie 4 et qui sont destinés à venir serrer un tronçon de longueur du pipe-line (ou ombilical ou câble) à déposer.

Selon la méthode de pose, le tensionneur 1 est positionné de sorte que son axe de symétrie 4 soit orienté (i) verticalement ou sensiblement verticalement, ou (ii) horizontalement ou au moins sensiblement horizontalement.

Sur la figure 1, les caissons de guidage 3 sont au nombre de quatre.

En fonction de la conception du tensionneur 1, les caissons de guidage 3 peuvent également être au nombre de deux ou de trois, voire plus.

Au sein du tensionneur 1, les caissons de guidage 3 sont le cas échéant répartis selon deux paires, qui s'étendent dans deux plans perpendiculaires et sécants au niveau d'une ligne confondue avec l'axe de symétrie 4.

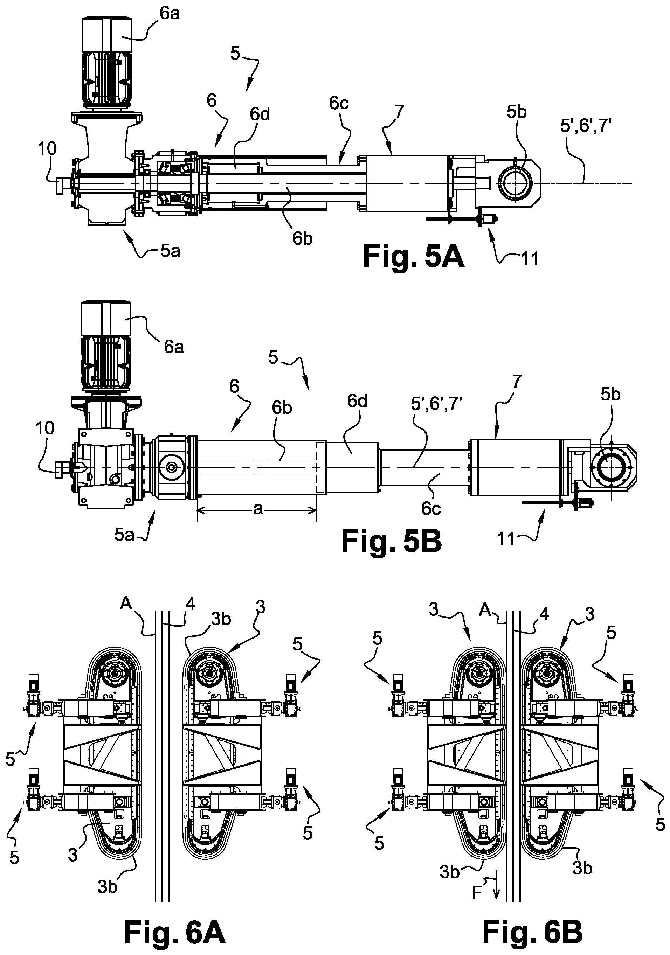

Tel que représenté sur la figure 2, les caissons de guidage 3, de structure classique, comprennent chacun un corps support allongé 3a sur lequel est guidé en translation une chaîne périphérique de guidage 3b entraînée par au moins une roue motorisée 3c.
Comme on peut le voir sur la figure 6, un brin avant de cette chaîne périphérique 3b s'étend parallèlement à l'axe de symétrie 4, pour constituer la surface de contact avec un tronçon du corps à déposer.

Le corps support 3a de ce caisson de guidage 3 est monté sur le châssis 2 par l'intermédiaire de moyens de manoeuvre assurant le pilotage en translation des caissons 3 parallèlement à eux-mêmes, et selon une direction perpendiculaire à l'axe de symétrie 4 du tensionneur 1.

Les moyens de manoeuvre associés à chacun des caissons 3 comprennent (i) des actionneurs linéaires 5 (figure 2), assurant le déplacement en translation des caissons 3, et (ii) des moyens de commande (non représentés) pour le pilotage desdits actionneurs 5 et desdits caissons 3 associés.

Plus précisément et tel que représenté sur la figure 2, chaque caisson 3 est associé à un ensemble de quatre actionneurs linéaires 5, répartis par paires de part et d'autre du corps support 3a.
Ces actionneurs linéaires 5 ne sont pas représentés sur la figure 1, dans un souci de simplification.

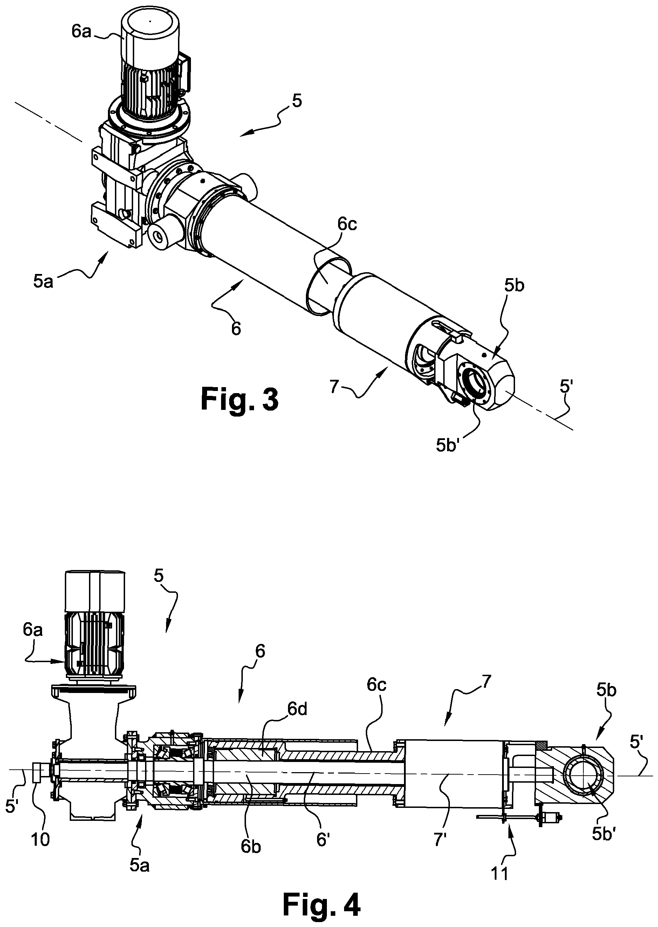

Ces différents actionneurs 5 ont une structure identique, telle que décrite ci-dessous en relation avec les figures 3 et 4.

Comme on peut le voir sur ces figures 3 et 4, chaque actionneur linéaire 5 est constitué (i) par un vérin de manoeuvre 6, prolongé (ii) par des moyens ressorts 7.

Le vérin de manoeuvre 6 et les moyens ressorts associés 7 présentent respectivement un axe longitudinal d'allongement 6' et 7'. Ces axes d'allongement 6' et 7' sont orientés coaxialement, ou au moins approximativement coaxialement l'un par rapport à l'autre, pour former ensemble l'axe général d'allongement 5' de l'actionneur linéaire 5.

Le vérin de manoeuvre 6 consiste ici en un vérin électrique comportant des moyens moteurs électriques 6a pour l'entraînement en rotation d'une vis de manoeuvre 6b, de préférence une vis à rouleaux satellites, associée à un élément mobile formant tige 6c, par l'intermédiaire d'un écrou satellite 6d.

Un tel vérin électrique peut être choisi parmi ceux proposés dans le commerce. Il présente avantageusement une force de poussée (et/ou de traction) supérieure ou égale à 250 kN, avec une course supérieure ou égale à 250 mm.
D'autre part, les moyens moteurs 6a peuvent comporter une réduction de faible puissance et/ou une réduction à deux sens de rotation.
Ce vérin électrique 6 est encore avantageusement choisi parmi ceux comportant deux vitesses d'allongement : (i) une vitesse de serrage lente, par exemple sur 50 mm, et (ii) une vitesse d'approche rapide, correspondant par exemple à une vitesse deux fois supérieure par rapport à celle de la vitesse de serrage précitée.

Les moyens ressorts 7 consistent avantageusement en un dispositif muni de moyens élastiques pour lui permettre de reprendre sa forme initiale à l'arrêt de la sollicitation en déformation, avantageusement sous la forme d'un vérin à effet ressort (ou à ressort de rappel).

Les moyens ressorts 7 sont avantageusement choisis parmi les ressorts en forme de vérin, c'est-à-dire de préférence les ressorts de compression/traction du type à gaz, à ressort métallique ou à élastomère.

Ces moyens ressorts sont de plus avantageusement choisis parmi ceux disponibles dans le commerce, et qui ont une raideur linéaire sur une course comprise entre 50 et 150 mm, et de préférence une raideur linéaire sur une course de l'ordre de 100 mm.

De préférence, la raideur de ces moyens ressorts 7 est choisie avec une capacité supérieure ou égale à 250 kN.

Les deux éléments 6 et 7 constitutifs de l'actionneur linéaire 5, sont juxtaposés et solidarisés ensemble, en combinaison avec des moyens de fixation (par exemple du type boulonnage).
Plus précisément, les moyens ressorts 7 sont portés ici par la partie mobile 6c du vérin de manoeuvre 6.

L'actionneur linéaire 5 ainsi constitué comporte :
(i) une première extrémité 5a, constituée par l'extrémité libre du vérin de manoeuvre 6 (à l'opposé des moyens ressorts 7), comportant des moyens pour sa solidarisation avec le châssis de tensionneur 2, par exemple constitués par les tourillons du vérin, et
(ii) une seconde extrémité 5b, constituée par l'extrémité libre des moyens ressorts 7 (à l'opposé du vérin de manoeuvre 6), comportant des moyens 5b pour sa solidarisation avec le caisson 3 associé (et en particulier son corps support 3a), par exemple sous la forme d'un axe instrumenté (indiquant l'effort appliqué par le vérin).

Pour un contrôle optimal de l'action de serrage des caissons 3 sur le corps allongé associé, un ensemble de moyens capteurs sont prévus pour la mesure de grandeurs physiques au niveau des actionneurs linéaires 5 associés.
Au moins l'un des actionneurs linéaires 5 associés à chaque caisson 3 est équipé de tels moyens capteurs. Mais, de préférence, tous les actionneurs linéaires 5 sont équipés de ces moyens capteurs.

Tout d'abord, l'actionneur linéaire 5 est équipé de moyens capteurs de force, pour mesurer la valeur de force de compression, et éventuellement de traction, qui s'exerce sur lui selon une direction orientée coaxialement à son axe longitudinal d'allongement 5' et générée par le corps en appui sur le caisson associé 3.
Ces moyens capteurs de force (non représentés) sont choisis avantageusement parmi :
(i) des moyens pour le contrôle de couple moteur équipant les moyens moteurs 6a du vérin électrique 6, et/ou
(ii) des moyens capteurs d'effort, par exemple de type cellule de charge, qui sont installés au niveau de son extrémité 5b destinée à être associée à l'un des caissons 3.

Les moyens de contrôle du couple moteur consistent par exemple en des moyens de mesure du courant électrique dans le moteur.

Les moyens capteurs d'effort consistent par exemple en un dispositif du type jauge de contrainte, en l'occurrence sous la forme d'un axe instrumenté.

Ces moyens capteurs de force permettent l'obtention d'une valeur de compression (et/ou de traction) exercée sur l'actionneur, exprimée avantageusement en newton.

D'autre part, l'actionneur linéaire 5 est encore équipé de moyens capteurs d'allongement, pour mesurer la valeur de son allongement selon l'axe longitudinal 5'.

Plus précisément, le vérin de manoeuvre 6 et les moyens ressorts 7 comportent chacun leurs propres moyens capteurs d'allongement, pour mesurer la valeur de leur allongement respectif et la valeur d'allongement totale de l'actionneur 5.

Les moyens capteurs d'allongement équipant le vérin électrique 6 consistent avantageusement en un codeur rotatif 10 qui est associé à la vis 6b. Il peut s'agir par exemple d'un codeur rotatif absolu.

Les moyens ressorts élastiques 7 sont quant à eux équipés d'un codeur linéaire 11 qui est choisi par exemple parmi les codeurs à bande magnétique absolue, les capteurs de déplacement à câble, ou encore les capteurs de déplacement capacitifs.

Les moyens programmables (non représentés) sont connectés aux actionneurs linéaires 5 et à leurs différents moyens capteurs, de sorte à assurer le pilotage optimal des caissons 3, notamment en termes de serrage sur le corps guidé.

Ces moyens programmables comportent des moyens pour piloter l'allongement du vérin de manoeuvre 6 en fonction :
(i) d'une part, de la valeur de la force de compression mesurée par les moyens capteurs de force précités et tenant compte d'une consigne de valeur de force de compression,
(ii) d'autre part, de la valeur d'allongement de l'actionneur linéaire 5 mesurée par les capteurs d'allongement 10 et 11.

Ces moyens programmables convenablement configurés visent à assurer une force de serrage optimale des caissons 3 sur le pipe-line (ou l'ombilical ou le câble), et à ajuster correctement la position du tronçon de pipe-line par rapport à l'axe de symétrie 4 du tensionneur 1. Ils permettent également de garder l'effort constant entre les différents vérins.

En pratique, la consigne de valeur de force de compression est ajustée et choisie de sorte à se situer avantageusement au milieu, ou dans une position intermédiaire déterminée, de la course de raideur linéaire des moyens ressorts élastiques 7.

En parallèle de ce réglage du serrage des caissons 3 sur le pipe-line (ou ombilical ou câble), la structure du tensionneur 1 permet de connaître à tout moment la valeur d'allongement de chaque actionneur linéaire 5.
Cette particularité fonctionnelle permet aux moyens programmables de piloter l'allongement des vérins de manoeuvre 6 de sorte que les actionneurs linéaires 5 associés aux caissons 3 en regard présentent des valeurs d'allongement identiques, ou au moins approximativement identiques.

La figure 5 illustre les mouvements des deux éléments 6 et 7 constitutifs de l'actionneur linéaire 5 décrit ci-dessus.
Le vérin 6 est manoeuvré en rétraction (figure 5A) et en allongement (figure 5B) par les moyens programmables, selon son axe longitudinal d'allongement 6'.
Les moyens ressorts 7 sont autonomes par rapport aux moyens programmables ; ils subissent des phénomènes d'allongement (figure 5A) et de rétraction (figure 5B) en fonction de la force de compression s'exerçant sur l'actionneur linéaire 5, selon son axe longitudinal 5'.

Un exemple de mise en oeuvre de deux caissons 3 en regard est illustré schématiquement en relation avec la figure 6, pour le serrage d'un pipe-line A (ou ombilical ou câble).

La première étape de fonctionnement consiste en une phase de serrage du pipe-line A.

Pour cela, chaque moteur rotatif 6a des actionneurs linéaires 5 est actionné en vitesse rapide pour assurer le déploiement du vérin électrique 6 (comme illustré sur la figure 5B) et pour effectuer les premiers millimètres d'approche vers le pipe-line A. Lorsque les caissons 3 arrivent à quelques millimètres du point d'impact, les moteurs 6a passent en petite vitesse.
Au moment de l'impact, les moyens ressorts 7 se compriment (comme illustré sur la figure 5B), jusqu'à ce que la valeur de force de compression mesurée atteigne la valeur de consigne prédéterminée.
Lorsque cette valeur de consigne est atteinte, les moyens programmables commandent l'arrêt des moteurs 6a et de leur verrouillage en position.
Le serrage sur le tronçon de pipe-line A est alors complet et convenable (figure 6B).

Depuis cette configuration serrée des caissons 3 sur le pipe-line A, on passe ensuite dans une phase dite de régulation et d'avancement contrôlé du pipe-line.
Les chaines d'entraînement 3c des caissons 3 sont pour cela mises en action pour assurer la translation contrôlée du pipe-line A, comme illustré par la flèche F sur la figure 6B.
Si la section du pipe-line A varie entre les deux caissons 3, les moyens ressorts élastiques 7 se compriment ou se déploient, maintenant ainsi un effort de serrage régulier sur le corps allongé A en cours de cheminement.

Dans le cas où la valeur de force de compression atteint une valeur seuil maximale ou minimale, les moyens programmables redémarrent la motorisation 6a du ou des vérins électriques 6 correspondants, à petite vitesse, respectivement pour leur rétractation ou leur déploiement sur une distance suffisante pour retrouver la consigne de valeur de force de compression.

Dans cette phase de régulation, les caissons 3 sont également manoeuvrés de sorte à maintenir un centrage optimal du pipe-line A par rapport à l'axe général 4 du tensionneur 1.
Pour cela, les moyens programmables pilotent l'allongement des vérins de manoeuvre 6 de sorte que la valeur d'allongement des actionneurs linéaires 5 associés aux caissons 3 en regard soit identique ou au moins approximativement identique.

Bien entendu, un pilotage similaire est mis en oeuvre sur les deux autres caissons 3 constitutifs du tensionneur 1.

Dans le cas d'un arrêt de pilotage des actionneurs linéaires 5 (coupure d'alimentation en énergie, défaillance des moyens de pilotage, etc.), les moyens ressorts élastiques 7 permettent de préserver une possibilité de variation de longueur au niveau des caissons 3, apte ainsi à limiter jusqu'à un certain niveau les efforts de compression s'exerçant sur ces derniers.

Le tensionneur selon l'invention s'avère particulièrement efficace pour assurer le serrage et l'avancement contrôlés d'un corps présentant des variations de section. Il assure également une fonction de sécurité, par le maintien d'un serrage sur le corps allongé en cours de dépose, dans le cas d'un arrêt non souhaité du pilotage des actionneurs associés.

## Revendications

1. Tensionneur pour le serrage et l'avancement contrôlés d'un corps allongé (A), notamment pour une installation de dépose de pipe-lines, d'ombilicaux ou de câbles, lequel tensionneur (1) comprend un châssis (2) portant au moins deux caissons de guidage (3) qui sont agencés autour d'un axe de symétrie (4), pour le serrage d'un tronçon dudit corps allongé (A), lesquels caissons de guidage (3) sont montés mobiles sur ledit châssis (2) par l'intermédiaire de moyens de manoeuvre (5) agencés pour assurer leur pilotage en translation, d'une part, parallèlement à eux-mêmes, et d'autre part, selon une direction orientée perpendiculairement par rapport audit axe de symétrie (4),
lesdits moyens de manoeuvre (5) associés à chacun desdits caissons (3) comprenant:
(i) au moins un actionneur linéaire (5) comportant un vérin de manoeuvre (6), lequel vérin de manoeuvre (6) présente un axe longitudinal d'allongement (6'), et (ii) des moyens programmables pour le pilotage dudit vérin de manoeuvre (6) en allongement, **caractérisé en ce que** ledit vérin de manoeuvre (6) est prolongé par des moyens ressorts (7), et que lesdits moyens ressorts (7) présentent un axe longitudinal d'allongement (7'), lesdits axes d'allongement (6',7') du vérin de manoeuvre (6) et des moyens ressorts (7) étant orientés coaxialement, ou au moins approximativement coaxialement, l'un par rapport à l'autre pour former ensemble l'axe d'allongement (5') dudit actionneur linéaire (5).

2. Tensionneur selon la revendication 1, **caractérisé en ce que** le ou les vérins de manoeuvre (6) consistent en des vérins électriques comportant chacun des moyens moteurs électriques (6a) pour la manoeuvre en rotation d'une vis (6b) associée à une partie formant tige (6c) par l'intermédiaire d'un écrou (6d).

3. Tensionneur selon l'une quelconque des revendications 1 ou 2, **caractérisé en ce que** le ou les moyens ressorts (7) consistent en un ressort en forme de vérin.

4. Tensionneur selon l'une quelconque des revendications 1 à 3, **caractérisé en ce que** le ou les actionneurs linéaires (5) sont équipés de moyens capteurs de force, pour mesurer au moins la valeur de la force de compression s'exerçant sur ledit actionneur linéaire (5), **en ce que** le ou les vérins de manoeuvre (6) et les moyens ressorts (7) comportent chacun des moyens capteurs d'allongement (10, 11) pour mesurer la valeur de leurs allongements respectifs, et **en ce que** les moyens programmables pilotent l'allongement de chaque vérin de manoeuvre (6) en fonction, d'une part, de ladite valeur de force de compression mesurée et d'une consigne de valeur de force de compression, et d'autre part, de la valeur d'allongement de l'actionneur linéaire (5) mesurée par lesdits capteurs d'allongement (10, 11).

5. Tensionneur selon la revendication 4, **caractérisé en ce qu'**il comporte au moins deux caissons (3) disposés en regard, répartis autour de son axe de symétrie (4), et **en ce que** les moyens programmables associés auxdits caissons (3) en regard pilotent l'allongement de leurs vérins de manoeuvre (6) en fonction également de la valeur d'allongement des actionneurs linéaires (5) en regard.

6. Tensionneur selon la revendication 5, **caractérisé en ce que** les moyens programmables pilotent l'allongement des vérins de manoeuvre (6) en regard de sorte que la valeur d'allongement des actionneurs linéaires (5) en regard soit identique ou au moins approximativement identique.

7. Tensionneur selon l'une quelconque des revendications 4 à 6, **caractérisé en ce que** les moyens capteurs d'allongement (11) équipant les moyens ressorts (7) consistent en un codeur linéaire.

8. Tensionneur selon l'une quelconque des revendications 4 à 7 prises en combinaison avec la revendication 2, **caractérisé en ce que** les moyens capteurs d'allongement (10) équipant ledit vérin de manoeuvre (6) consistent en un codeur rotatif associé à sa vis (6b).

9. Tensionneur selon l'une quelconque des revendications 1 à 8, **caractérisé en ce que** les vérins de manoeuvre (6) ont chacun une longueur de course qui est supérieure à la longueur de course des moyens ressorts (7).

10. Tensionneur selon l'une quelconque des revendications 1 à 9, **caractérisé en ce que** les actionneurs linéaires (5) sont fixés chacun sur le châssis (2) et sur l'un des caissons de guidage (3), lesquels actionneurs (5) sont orientés de sorte que leur vérin de manoeuvre (6) soit solidarisé avec ledit châssis (2) et de sorte que leurs moyens élastiques ressorts (7) soient solidarisés avec l'un desdits caissons de guidage (3).

## Patentansprüche

1. Spannvorrichtung zur kontrollierten Einspannung und Beförderung eines länglichen Körpers (A), insbesondere für eine Anlage zum Verlegen von Pipelines, Ellergie- oder Versorgungsleitungen, wobei die Spannvorrichtung (1) ein Chassis (2) aufweist, das wenigstens zwei um eine Symmetrieachse (4) angeordnete Führungskästen (3) zum Einspannen eines Abschnitts des länglichen Körpers (A) trägt, wobei die Führungskästen (3) auf dem Chassis (2) durch Handhabungsmittel (5) bewegbar angebracht sind, die dazu ausgelegt sind, deren Steuerung einerseits translatorisch parallel zu sich selbst und andererseits in einer zur besagten Symmetrieachse (4) senkrechten Richtung sicherzustellen,
wobei die jedem der Führungskästen (3) zugeordneten Handhabungsmittel (5) (i) wenigstens ein lineares Betätigungsmittel (5), das einen Betätigungszylinder (6) aufweist, wobei der Betätigungszylinder (6) eine Ausfahrlängsachse (6') aufweist, und (ii) programmierbare Mittel für die Steuerung des Ausfahrens des Betätigungszylinders (6) aufweist, dadurch gekenntzeichnet, daß der Betätigungszylinder (6) durch Federmittel (7) ausgefahren wird und daß die Federmittel (7) eine Ausfahrlängsachse (7') aufweisen, wobei die Ausfahrlängsachsen (6', 7') des Betätigungszylinders (6) und der Federmittel (7) zueinander koaxial oder wenigstens nährungsweise koaxial ausgerichtet sind, um gemeinsam die Ausfahrachse (5') der linearen Handhabungsmittel (5) zu bilden.

2. Spannvorrichtung gemäß Anspruch 1, dadurch gekenntzeichnet, daß der oder die Betätigungszylinder (6) aus elektrischen Arbeitszylindern bestehen, von denen jeder elektrische Antriebsmittel (6a) zum Betreiben einer mittels einer Mutter (6d) einem eine Stange (6c) bildenden Teil zugeordneten Schraube (6b) aufweist,.

3. Spannvorrichtung gemäß Anspruch loder 2, **dadurch gekennzeichnet, daß** das oder die Federmittel (7) aus einer Feder in Form eines Arbeitszylinders bestehen.

4. Spannvorrichtung gemäß einem der Ansprüche 1 bis 3, **dadurch gekennzeichnet, daß** das oder die Betätigungsmittel (5) mit Kraftsensormitteln ausgestattet sind, um wenigstens den Wert der auf das lineare Betätigungsmittel (5) wirkenden Kompressionskraft zu messen, daß der oder die Betätigungszylinder (6) und die Federmittel (7) jeweils Ausfahrsensormittel (10, 11) zum Messen des Werts von deren jeweiligem Ausfahren aufweisen, und daß die programmierbaren Mittel das Ausfahren jedes Betätigungszylinders (6) in Abhängigkeit von einerseits dem gemessenen Wert der Kompressionskraft und eines vorgegebenen Werts für die Kompressionskraft und andererseits vom mittels der Ausfahrsensormittel (10, 11) gemessenen Ausfahrwert des linearen Betätigungsmittels (5) steuern.

5. Spannvorrichtung gemäß Anspruch 4, **dadurch gekennzeichnet, daß** sie wenigstens zwei einander zugewandte, zum deren Symmetrieachse (4) verteilte Kästen (3) aufweist, und daß die den einander zugewandten Kästen (3) zugeordneten programmierbaren Mittel das Ausfahren der Betätigungszylinder (6) ebenfalls in Abhängigkeit vom Ausfahrwert des linearen Betätigungsmittels (5) steuern.

6. Spannvorrichtung gemäß Anspruch 5, dadurch gekennzeichet, daß die programmierbaren Mittel das Ausfahren der einander zugewandten Betätigungszylinder (6) so steuern, daß der Ausfahrwert der einander zugewandten linearen Betätigungsmittel (5) identisch oder nahezu identisch ist.

7. Spannvorrichtung gemäß einem der Ansprüche 4 bis 6, **dadurch gekennzeichnet, daß** die Ausfahrsensormittel (11), mit denen die Federmittel (7) ausgestattet sind, aus einem linearen Kodierer bestehen.

8. Spannvorrichtung gemäß einem der Ansprüche 4 bis 7 in Kombination mit Anspruch 2, **dadurch gekennzeichnet, daß** die Ausfahrsensormittel (10), mit denen der Betätigungszylinder (6) ausgestattet ist, aus einem dessen Schraube (6b) zugeordneten Dreh-Kodierer bestehen.

9. Spannvorrichtung gemäß einem der Absprüche 1 bis 8, **dadurch gekennzeichnet, daß** die Betätigungszylinder (6) jeweils eine Ausfahrlänge aufweisen, die größer als die Ausfahrlänge der Federmittel (7) ist.

10. Spannvorrichtung gemäß einem der Ansprüche 1 bis 9, **dadurch gekennzeichnet, daß** die linearen Betätigungsmittel (5) jeweils am Chassis (2) und an einem der Führungskästen (3) befestigt sind, wobei die Betätigungsmittel (5) so ausgerichtet sind, daß deren Betätigungszylinder (6) mit dem Chassis (2) fest verbunden ist und daß deren elastische Federmittel (7) mit einem der Führungskästen (3) fest verbunden sind.

## Claims

1. A tensioner for the controlled clamping and moving of an elongated body (A), in particular for an installation for laying pipelines, umbilicals or cables, which tensioner (1) comprises a frame (2) carrying at least two guiding boxes (3) that are arranged about an axis of symmetry (4), for clamping a segment of said elongated body (A), which guiding boxes (3) are mounted mobile on said frame (2) through operating means (5) arranged so as to ensure their translational control, on the one hand, parallel to each other, and on the other hand, according to a direction oriented perpendicular to said axis of symmetry (4),
**characterized in that** said operating means (5) associated with each of said boxes (3) comprise:
(i) at least one linear actuator (5) including an operating cylinder (6) extended by spring means (7), which operating cylinder (6) and which spring means (7) each have a longitudinal extension axis (6', 7'), said extension axes (6', 7') being oriented coaxially, or at least approximately coaxially, relative to each other, so as to form together the extension axis (5') of said linear actuator (5), and
(ii) programmable means for controlling said operating cylinder (6) in extension.

2. The tensioner according to claim 1, **characterized in that** the operating cylinder(s) (6) consist in electric cylinders each including electric motor means (6a) for the rotational operation of a screw (6b) associated with a rod part (6c) through a nut (6d).

3. The tensioner according to any one of claims 1 or 2, **characterized in that** the one or more spring means (7) consist in a cylinder-shaped spring.

4. The tensioner according to any one of claims 1 to 3, **characterized in that** the linear actuator(s) (5) are equipped with force sensor means, to measure at least the value of the compression force exerted on said linear actuator (5), **in that** the operating cylinder(s) (6) and the spring means (7) each include extension sensor means (10, 11) to measure the value of their respective extension, and **in that** the programmable means control the extension of each operating cylinder (6) as a function, on the one hand, of said measured compression force value and of a compression force set-value, and on the other hand, of the extension value of the linear actuator (5) measured by said extension sensors (10, 11).

5. The tensioner according to claim 4, **characterized in that** it includes at least two boxes (3) arranged opposite to each other, distributed about its axis of symmetry (4), and **in that** the programmable means associated with the opposite boxes (3) control the extension of their operating cylinders (6) as a function also of the extension value of the opposite linear actuators (5).

6. The tensioner according to claim 5, **characterized in that** the programmable means control the extension of the opposite operating cylinders (6) so that the extension values of the opposite linear actuator (5) are identical or at least approximately identical.

7. The tensioner according to any one of claims 4 to 6, **characterized in that** the extension sensor means (11) equipping the spring means (7) consist in a linear encoder.

8. The tensioner according to any one of claims 4 to 7, taken in combination with claim 2, **characterized in that** the extension sensor means (10) equipping said operating cylinder (6) consist in a rotational encoder associated with its screw (6b).

9. The tensioner according to any one of claims 1 to 8, **characterized in that** the operating cylinders (6) each have a stroke length that is higher than the stroke length of the spring means (7).

10. The tensioner according to any one of claims 1 to 9, **characterized in that** the linear actuators (5) are each fixed on the frame (2) and on one of the guiding boxes (3), which actuators (5) are oriented so that their operating cylinder (6) is fastened to said frame (2) and so that their elastic spring means (7) are fastened to one of said guiding boxes (3).
